# FASCICULE DE BREVET EUROPEEN

(11) **EP 0 491 017 B1**
(45) Date de publication et mention de la délivrance du brevet: **16.03.1994**
(21) Numéro de dépôt: 91911473.6
(22) Date de dépôt: 17.05.1991
(51) Int. Cl.: B64C 27/00, B64C 25/56, B64D 45/00

(54) **DISPOSITIF DE SECURITE POUR HELICOPTERES ET MACHINES SIMILAIRES A VOILURE TOURNANTE**
SICHERHEITSEINRICHTUNG FÜR HUBSCHRAUBER UND SOLCHE DREHFLÜGELFLUGZEUGE
SAFETY DEVICE FOR HELICOPTERS AND SIMILAR MACHINES HAVING ROTORS

(30) Priorité: 06.07.1990 FR 9009064
(43) Date de publication de la demande: 24.06.1992
(73) Titulaire: CARROT, Louis, 42530 Saint-Genest-Lerpt (FR)
(72) Inventeur: CARROT, Louis, 42530 Saint-Genest-Lerpt (FR)
(74) Mandataire: Dupuis, François
(86) Numéro de dépôt international: FR9100399
(87) Numéro de publication internationale: WO9200876

(56) Documents cités:
- EP-A- 0 091 660
- FR-E- 090 266
- US-A- 2 621 874
- US-A- 3 131 888

## Description

L'invention se rattache au secteur technique des dispositifs de sécurité et de protection d'hélicoptères pour éviter leur "prise de sol" brutale.

Il est rapporté régulièrement par la presse les accidents d'hélicoptères qui s'écrasent au sol à la suite d'incidents mécaniques ou défaillances de sustentation lorsqu'ils évoluent à une altitude inférieure à la mise en autorotation. Dans de telles circonstances, les hélicoptères atteignent une vitesse d'impact au sol ou sur l'eau générant une déccélération mortelle avec écrasement au sol.

Il a été proposé, dans des applications différentes relatives au parachutage de charges, des dispositifs amortisseurs de chocs sous forme de moyens gonflables.

On connaît également l'utilisation de moyens gonflables applicables sous l'ossature d'avions, afin de permettre leur atterrissage en douceur, ces moyens gonflables étant agencés avec des patins d'atterrissage susceptibles d'assurer un freinage progressif et complet de l'avion équipé de ces moyens.

On connaît également (US-A-2621874) l'utilisation de moyens gonflables sur les avions et hélicoptères associés à leur piètement ou zone d'appui pour réaliser des zones de flottaison sur l'eau.

Aucun des dispositifs connus présentant des moyens gonflables n'est cependant adapté pour permettre de protéger en toute sécurité les hélicoptères en cas de chute ou "crash".

Le but recherché selon l'invention était donc de rechercher et de trouver une solution permettant d'assurer la sécurité, la protection et la survie du personnel naviguant à bord des hélicoptères en limitant l'effet de l'impact par un amortissement progressif et contrôlé de l'hélicoptère lors de la chute ou "crash".

Ces buts et d'autres encore ressortiront bien de la suite de la description.

Selon l'invention, le dispositif de sécurité pour hélicoptères et machines à voilure tournante, est remarquable en ce qu'il comprend une enveloppe gonflable fixée sous la coque inférieure de l'hélicoptère en épousant, dans sa partie supérieure, la totalité de la face de la coque inférieure de l'hélicoptère et ayant en position d'utilisation et de gonflage, une forme trapézoïdale de très grand volume débordant très largement du volume défini par l'hélicoptère en augmentant le polygone de sustentation, ladite enveloppe étant agencée sur ses côtés avec des moyens de renfort anti-gauchissement, et des moyens limiteurs et contrôleurs de la pression à l'intérieur.

Selon un mode de réalisation préféré, l'enveloppe est agencée avec des moyens limiteurs de pression constitués par des évents disposés dans la zone supérieure et dans la zone inférieure de l'enveloppe permettant de réguler sa pression existante tout en conservant une valeur minimale de pression résiduelle pour autoriser sa flottabilité.

Ces caractéristiques et d'autres encore ressortiront bien de la suite de la description.

Pour fixer l'objet de l'invention illustré d'une manière non limitative aux figures des dessins où :

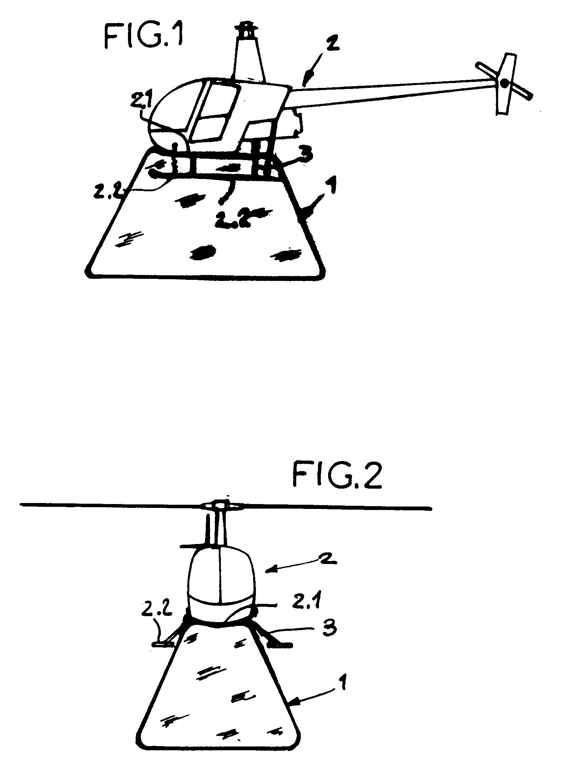

La figure 1 est une vue à caractère schématique illustrant l'hélicoptère vu de côté agencé avec le dispositif de sécurité objet de la présente invention en position déployée.

La figure 2 est une vue similaire à la figure 1 en vue de face.

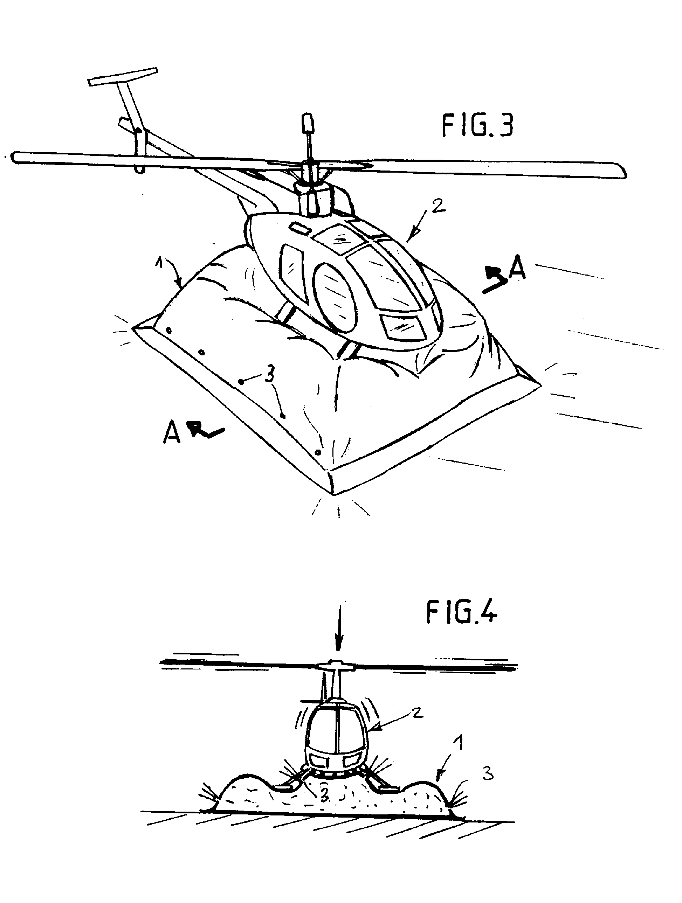

La figure 3 est une vue en perspective montrant la position de l'hélicoptère et du dispositif de sécurité après chute.

La figure 4 est une vue en coupe transversale selon la ligne A-A de la figure 3.

La figure 5 est une vue de l'enveloppe gonflable vue en perspective avec illustration des moyens de renforcement.

La figure 6 est une figure de profil selon la figure 5.

Les figures 7 et 8 sont des vues à caractère schématique montrant l'adjonction de moyens complémentaires de sécurité, latéralement sur la coque de l'hélicoptère.

La figure 9 est une vue partielle selon la figure 7 montrant la forme de l'enveloppe avec l'adjonction des moyens complémentaires précités.

Afin de rendre plus concret l'objet de l'invention, on le décrit maintenant d'une manière non limitative en se référant aux exemples de réalisation illustrés aux figures des dessins.

On a illustré par la référence (2) un hélicoptère dont la coque inférieure (2.1) est agencée pour recevoir une enveloppe gonflable (1). Cette enveloppe est fixée sur la partie inférieure de l'hélicoptère entre les éléments constituant son piètement d'appui (2.2). Cette enveloppe est réalisée en tout matériau approprié d'une grande solidité et en particulier en tissu composé de fibres aramides telles que celles commercialisées sous la marque "KEVLAR". Ainsi cette enveloppe est d'une très grande solidité pour tenir compte des pressions exercées dans celle-ci lors du gonflage et des conditions d'impact au sol ou sur l'eau pour assurer un effet amortisseur. Cette enveloppe épouse, dans sa partie supérieure, la totalité de la face de la coque inférieure de l'hélicoptère, afin d'avoir une surface de contact maximum. En position d'utilisation et de gonflage, cette enveloppe est déployée en présentant une forme trapézoïdale d'un très grand volume pour définir une surface au plan d'impact beaucoup plus grande que la surface initiale de la coque de la machine. Cette enveloppe en position déployée déborde très largement du volume défini par l'hélicoptère lui-même en constituant un matelas amortisseur de très grandes dimensions, en augmentant ainsi le polygone de sustentation qui permet un meilleur amortissement lors de l'impact.

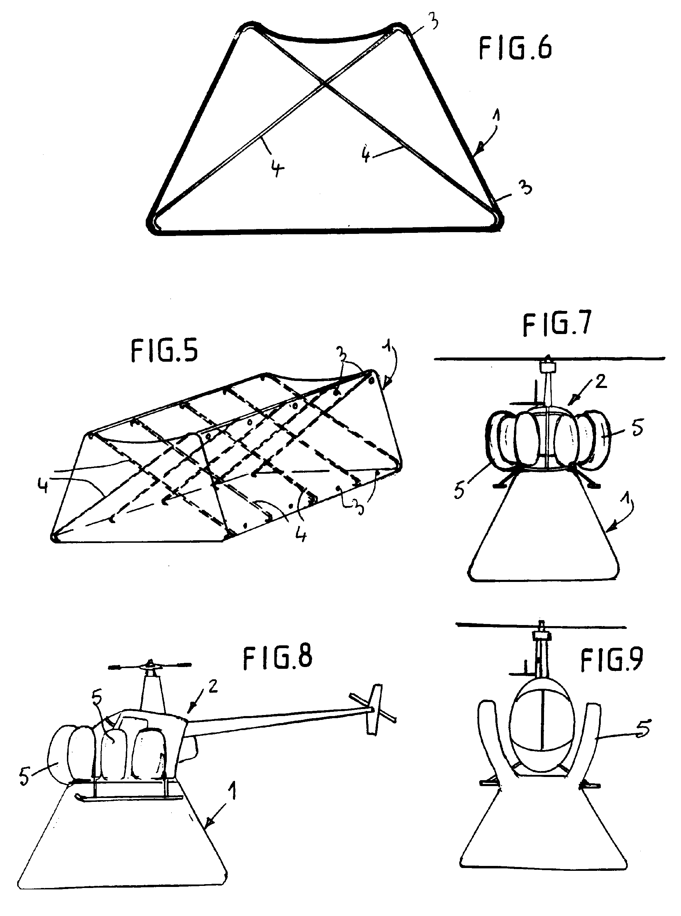

Afin de conférer une certaine stabilité de l'enveloppe en position déployée , celle-ci est agencée intérieurement et notamment près de ses côtés opposés lateraux et sur tout ou partie de la longueur de l'enveloppe avec des zones de renforcement judicieusement disposées pour supprimer le gauchissement de l'enveloppe. Ces renforts illustrés par la référence (4) sont des bandes pouvant être en matériau du type fibres aramides et sont disposées et fixées par couture par exemple ou autre aux parties d'angles opposées supérieure et inférieure de l'enveloppe en définissant un entrecroisement par alternance de position, tel que par exemple illustré figure 5. Ces renforts disposés intérieurement dans l'enveloppe permettent ainsi d'assurer une fonction d'anti-gauchissement et de préserver la forme initiale trapézoïdale de l'enveloppe après gonflage. Ces renforts sont également et par exemple constitués par des bandes disposées sur le pourtour périphérique des côtés latéraux de l'enveloppe en pouvant être disposés par entrecroisement.

Afin d'assurer une protection constante dans l'enveloppe, la pression du gaz est limitée et contrôlée par des moyens limiteurs de pression. Ces moyens sont par exemple des évents (3) qui sont disposés dans la zone supérieure et dans la zone inférieure de l'enveloppe en permettant de réguler la pression existante dans l'enveloppe, au cours de la phase de descente de l'hélicoptère et de son écrasement au sol. Ces évents sont sollicités par tous moyens appropriés qui permettent néanmoins de conserver une valeur minimale de pression résiduelle dans l'enveloppe pour permettre sa flottabilité. La pression du gaz dans l'enveloppe est ainsi limitée et contrôlée par lesdits évents.

Selon une autre disposition illustrée aux figures 7, 8 et 9, l'hélicoptère est agencé avec l'adjonction d'enveloppes additionnelles (5) susceptibles de se déployer latéralement et protéger en combinaison avec l'enveloppe principale la totalité de l'hélicoptère.

De manière avantageuse, ainsi qu'illustré figure 9, l'ensemble des enveloppes précitées forme un tout en permettant une communication de la pression entre l'enveloppe trapézoïdale disposée sous la coque et les enveloppes additionnelles disposées latéralement autour de la coque de l'hélicoptère. Dans ce cas, les évents peuvent être disposés dans la partie supérieure des enveloppes additionnelles pour permettre le contrôle et l'évacuation des gaz lors de la prise de sol et permettre ainsi un amortissement doux et progressif de l'hélicoptère en cas de "crash".

## Revendications

1. Dispositif de sécurité pour hélicoptères et machines à voilure tournante, caractérisé en ce qu'il comprend une enveloppe gonflable (1) fixée sous la coque inférieure (2.1) de l'hélicoptère (2) en épousant, dans sa partie supérieure, la totalité de la face de la coque inférieure (2.1) de l'hélicoptère et ayant en position d'utilisation et de gonflage, une forme trapézoïdale de très grand volume débordant très largement du volume défini par l'hélicoptère (2) en augmentant le polygone de sustentation, ladite enveloppe (1) étant agencée sur ses côtés avec des moyens (4) de renfort anti-gauchissement, et des moyens (3) limiteurs et contrôleurs de la pression à l'intérieur.

2. Dispositif selon la revendication 1, caractérisé en ce que l'enveloppe est réalisée en tissu composé de fibres aramides.

3. Dispositif selon la revendication 1, caractérisé en ce que l'enveloppe est agencée avec des moyens limiteurs de pression constitués par des évents (3) disposés dans la zone supérieure et dans la zone inférieure de l'enveloppe permettant de réguler sa pression existante tout en conservant une valeur minimale de pression résiduelle pour autoriser sa flottabilité.

4. Dispositif selon la revendication 1, caractérisé en ce que des enveloppes additionnelles sont déployées atéralement sur les côtés de l'hélicoptère, lesdites enveloppes (5) étant associées à l'enveloppe principale (1) pour permettre leur gonflage simultané et un amortissement total en cas de prise de sol de l'hélicoptère.

5. Dispositif selon la revendication 1, caractérisé en ce que les moyens de renfort anti-gauchissement sont réalisés par des bandes disposées et fixées à l'intérieur de l'enveloppe principale selon une position l'entrecroisement alternatif.

6. Dispositif selon la revendication 5, caractérisé en ce que les bandes de renforcement sont réalisées en fibres aramides.

7. Dispositif selon la revendication 5, caractérisé en ce que les bandes de renforcement sont fixées sur les côtés latéraux opposés de l'enveloppe et sur tout ou partie de la longueur de celle-ci.

8. Dispositif selon les revendications 3 et 5, caractérisé en ce que des moyens limiteurs de pression sont disposés dans la partie supérieure des enveloppes additionnelles, et dans la partie inférieure de l'enveloppe principale.

## Patentansprüche

1. Sicherheitsvorrichtung für Hubschrauber und Drehflügelflugzeuge, bestehend aus einer aufblasbaren Hülle (1), die unter dem unteren Rumpf (2.1) des Hubschraubers (2) befestigt wird und sich dabei mit ihrer Oberseite an die ganze untere Rumpffläche (2.1) des Hubschraubers anpaßt und die in der aufgeblasenen Gebrauchsposition eine großvolumige trapezartige Form einnimmt, welche die Unterstützungsfläche vergrößert und sehr weit über den vom Hubschrauber (2) beschriebenen Rauminhalt hinausgeht, wobei die besagte Hülle (1) an den Seiten verformungsverhindernde Verstärkungen (4) und im Innern druckbegrenzende und -überwachende Einrichtungen (3) besitzt.

2. Vorrichtung nach Anspruch 1, dadurch gekennzeichnet, daß die Hülle aus einem Aramidfasergewebe besteht.

3. Vorrichtung nach Anspruch 1, dadurch gekennzeichnet, daß die Hülle druckbegrenzende Lüftungslöcher (3) besitzt, die im oberen und im unteren Bereich der Hülle angeordnet sind und mit denen der bestehende Druck reguliert werden kann, wobei jedoch ein minimaler Restdruck beibehalten wird, um die Schwimmfähigkeit zu gewährleisten.

4. Vorrichtung nach Anspruch 1, dadurch gekennzeichnet, daß an den Seitenflächen des Hubschraubers zusätzliche Hüllen entfaltet werden, wobei diese Hüllen (5) mit der Haupthülle (1) in Verbindung stehen, damit sie gleichzeitig aufgeblasen werden können und bei der Bodenlandung des Hubschraubers für eine vollkommene Stoßdämpfung sorgen.

5. Vorrichtung nach Anspruch 1, dadurch gekennzeichnet, daß die verformungsverhindernden Verstärkungen aus Streifen bestehen, die in alternierender Verkreuzung im Innern der Haupthülle angeordnet und befestigt sind.

6. Vorrichtung nach Anspruch 5, dadurch gekennzeichnet, daß die Verstärkungsstreifen aus Aramidfasern bestehen.

7. Vorrichtung nach Anspruch 5, dadurch gekennzeichnet, daß die Verstärkungsstreifen an den entgegengesetzten Seitenteilen der Hülle und auf ihrer ganzen Länge bzw. Teillänge befestigt sind.

8. Vorrichtung nach den Ansprüchen 3 und 5, dadurch gekennzeichnet, daß druckbegrenzende Einrichtungen im oberen Teil der zusätzlichen Hüllen, und im unteren Teil der Haupthülle angeordnet sind.

## Claims

1. Safety device for helicopters and similar machines having rotors, characterized in that it includes an inflatable envelope (1) attached under the lower hull (2.1) of the helicopter (2) with the upper part fitting along the entire face of the lower hull (2.1), said envelope, when inflated for use, taking the form of a trapezoid of very considerable volume much greater than that taken up by the helicopter (2) due to increasing the polygon of lift, the sides of said envelope (1) including anti-warp bracing (4) and internal pressure limiters and controllers (3).

2. Device as claimed in claim 1, characterized in that the envelope is made of fabric consisting of aramide fibres.

3. Device as claimed in claim 1, characterized in that the envelope is equipped with pressure limiters consisting of vents (3) in the upper and lower areas designed to regulate existing pressure whilst maintaining the minimum residual pressure required for buoyancy.

4. Device as claimed in claim 1, characterized in that auxiliary envelopes (5) extend laterally along the sides of the helicopter and are connected to the main envelope (1) so as to ensure simultaneous inflation as well as total shock absorption in the event of a rough landing.

5. Device as claimed in claim 1, characterized in that the anti-warp bracing consists of strips fixed to the inside of the main envelope in an alternating criss-cross pattern.

6. Device as claimed in claim 5, characterized in that the reinforcing strips consist of aramide fibres.

7. Device as claimed in claim 5, characterized in that the reinforcing strips are fixed to the opposite lateral sides of the envelope along all or part of its length.

8. Device as claimed in claims 3 and 5, characterized in that the pressure limiters are installed in the upper part of the auxiliary envelopes and in the lower part of the main envelope.
